(19) Europäisches Patentamt / European Patent Office / Office européen des brevets

(11) **EP 4 095 543 A1**

(12) **DEMANDE DE BREVET EUROPEEN**

(43) Date de publication:
**30.11.2022 Bulletin 2022/48**

(21) Numéro de dépôt: **22173691.1**

(22) Date de dépôt: **17.05.2022**

(51) Classification Internationale des Brevets (IPC):
**G01S 5/02** *(2010.01)* **G01S 5/14** *(2006.01)*
**G01S 5/00** *(2006.01)* **G01S 1/02** *(2010.01)*

(52) Classification Coopérative des Brevets (CPC):
**G01S 5/0284; G01S 5/021; G01S 5/14;**
G01S 1/024; G01S 5/0036; G01S 5/0063

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **28.05.2021 FR 2105612**

(71) Demandeur: **Be Spoon**
**73372 Bourget du Lac (FR)**

(72) Inventeur: **JAMMES, Fabien**
**73100 BRISON SAINT INNOCENT (FR)**

(74) Mandataire: **Casalonga**
**Casalonga & Partners**
**Bayerstraße 71/73**
**80335 München (DE)**

(54) **PROCÉDÉ DE LOCALISATION D'UN DISPOSITIF MOBILE DANS UN ESPACE MULTIDIMENSIONNEL ET INFRASTRUCTURE CORRESPONDANTE**

(57) Des satellites fixes (Si) émettent des signaux de synchronisation, mutuellement temporellement asynchrones. Un dispositif récepteur fixe (DR) reçoit ces signaux de synchronisation (SSYi) au même titre que le dispositif mobile (DM).

Comme les signaux de synchronisation émis par les satellites ne sont pas temporellement synchronisés entre eux, le dispositif récepteur fixe va transmettre des informations temporelles manquantes (INFT) au dispositif mobile, élaborées à partir de la réception par le dispositif fixe de ces signaux de synchronisation, afin que le dispositif mobile puisse déterminer sa position.

A l'inverse, si le dispositif récepteur fixe, ou bien une entité couplée au dispositif fixe, souhaite déterminer la position du dispositif mobile, c'est le dispositif mobile qui va transmettre au dispositif fixe les informations temporelles manquantes qui vont permettre au dispositif fixe ou à l'entité, de déterminer la position du dispositif mobile.

## FIG.1

**Description**

Des modes de mise en œuvre et de réalisation concernent la localisation d'un dispositif mobile dans un espace, par exemple multidimensionnel, que la position du dispositif mobile soit déterminée par le dispositif mobile lui-même ou bien par une entité distincte du dispositif mobile.

Dans certaines applications, il peut être intéressant qu'un dispositif mobile, par exemple un chariot, puisse se déplacer de façon autonome dans un espace multidimensionnel, par exemple un hangar, pour par exemple aller chercher de façon automatique des objets, tels que des palettes ou des cartons, rangés à des endroits déterminés du hangar, sans heurter des obstacles, par exemple les murs du hangar.

A cet égard, la position du dispositif mobile doit pouvoir être déterminée de façon précise à tout instant. Et, cette position peut être déterminée par le dispositif mobile lui-même ou par une entité distincte du dispositif mobile, par exemple un serveur.

A cet égard, l'infrastructure comporte plusieurs satellites ou ancres, fixés sur des parois du hangar, et destinés à envoyer périodiquement des signaux à bande ultra large (UWB : Ultra Wide Band) de façon que le dispositif mobile soit capable de calculer sa propre position ou que sa position puisse être suivie en permanence par le serveur.

Dans de telles infrastructures, les satellites doivent être temporellement mutuellement synchronisés.

Et, afin d'obtenir une synchronisation temporelle précise, les satellites doivent soit être synchronisés à l'aide de signaux UWB ou être synchronisés à l'aide de signaux véhiculés sur des câbles reliant ces satellites.

Or, une synchronisation à l'aide de signaux à bande ultra large implique pour chaque satellite, une réception d'un nombre élevé de trames UWB ce qui implique une consommation d'énergie importante. De ce fait, les satellites ne peuvent pas être alimentés sur batterie, sauf à utiliser des batteries de taille importante, coûteuses et non compatibles par exemple avec la taille des satellites, et doivent être alimentés sur le secteur, ce qui est un inconvénient.

L'utilisation de câbles entre les satellites pour permettre leur synchronisation temporelle, représente une partie importante du coût de l'infrastructure.

Il serait également possible d'utiliser des horloges atomiques au niveau de chaque satellite, pour permettre leur synchronisation temporelle. Cependant, de telles horloges sont coûteuses.

Il existe par conséquent un besoin de proposer une infrastructure permettant une localisation précise d'un dispositif mobile au sein de celle-ci à un coût industriellement acceptable.

Selon un mode de mise en œuvre et de réalisation, il est proposé d'utiliser, en combinaison avec des satellites destinés uniquement à émettre des signaux dits de synchronisation, mutuellement temporellement non synchronisés (asynchrones), un dispositif récepteur fixe destiné à recevoir ces signaux de synchronisation au même titre que le dispositif mobile.

Les signaux de synchronisation sont émis dans des bases de temps qui sont propres aux satellites et présentant chacune un décalage temporel par rapport à un temps de référence absolu. Comme les signaux de synchronisation sont mutuellement non synchronisées, leur base de temps respective ne sont pas synchronisées c'est-à-dire qu'il n'y a pas de relation déterminée entre les décalages temporels respectifs faisant intervenir par exemple les distances entre les points d'émission de ces signaux de synchronisation.

Par ailleurs les instants d'émission de ce ces signaux temporels qui dépendent des décalages temporels des bases de temps respectives propres aux satellites, ne sont pas connus.

Le dispositif récepteur fixe n'est également pas synchronisé avec les satellites, c'est-à-dire qu'il reçoit les signaux de synchronisation dans une base de temps qui lui est propre, non synchronisée avec les bases de temps des satellites et avec un décalage temporel par rapport au temps absolu, également inconnu.

Le dispositif mobile n'est également pas synchronisé avec les satellites, c'est-à-dire qu'il reçoit les signaux de synchronisation dans une base de temps qui lui est propre, non synchronisée avec les bases de temps des satellites et avec un décalage temporel, également inconnu, dépendant du décalage temporel de sa base de temps par rapport au temps absolu.

Comme les signaux de synchronisation émis par les satellites ne sont pas temporellement synchronisés entre eux, le dispositif mobile ne peut pas déterminer sa position à partir de ces signaux de synchronisation car il lui manque des informations temporelles. Et c'est alors le dispositif récepteur fixe qui va transmettre les informations temporelles manquantes au dispositif mobile, élaborées à partir de la réception par le dispositif fixe de ces signaux de synchronisation, afin que le dispositif mobile puisse déterminer sa position.

A l'inverse, si le dispositif fixe, ou bien une entité couplée au dispositif fixe, souhaite déterminer la position du dispositif mobile, il ne peut pas le faire à partir de la seule réception des signaux de synchronisation émis par les satellites. Et dans ce cas, c'est le dispositif mobile qui va transmettre au dispositif fixe les informations temporelles manquantes qui vont permettre au dispositif fixe de déterminer la position du dispositif mobile.

Et, puisque les satellites ne font qu'émettre des signaux de synchronisation et que par conséquent, ils n'ont pas besoin de se mettre en mode réception pour écouter des signaux de façon à se synchroniser temporellement, ils peuvent être aisément alimentés sur batterie, par exemple de petite taille, car leur consommation d'énergie est nettement diminuée par rapport à des satellites devant se placer en mode réception pour se synchroniser temporellement.

Selon un aspect, il est proposé un procédé de localisation d'un dispositif mobile dans un espace de dimension N, N étant supérieur ou égal à 1.

Généralement, N est égal à 3, l'espace étant alors un espace tridimensionnel, par exemple un hangar.

Le procédé selon cet aspect comprend une émission d'au moins un groupe d'au moins N+1 signaux de synchronisation mutuellement temporellement asynchrones depuis respectivement au moins N+1 emplacements d'émission fixes dans ledit espace.

Par exemple, les signaux de synchronisation sont émis par des dispositifs émetteurs, ou satellites, situés à ces points d'émission, et avantageusement alimentés sur batterie.

Bien entendu le nombre de signaux de synchronisation peut être supérieur à N+1.

Le procédé comprend également une réception des signaux de synchronisation dudit au moins un groupe par le dispositif mobile et au niveau d'au moins un emplacement de réception fixe dans ledit espace.

Un dispositif récepteur peut être fixé à chaque emplacement de réception.

Le procédé comprend également une détermination de l'instant de réception de chaque signal de synchronisation dudit au moins un groupe par le dispositif mobile dans une base de temps propre au dispositif mobile.

Le procédé comprend également une détermination des instants de réception des signaux de synchronisation dudit au moins un groupe au niveau dudit au moins un emplacement de réception dans une base de temps propre à chaque emplacement de réception.

Bien entendu, il serait possible de prévoir plusieurs emplacements de réception fixes et donc plusieurs dispositifs de réception.

Le procédé comprend également une détermination de la position du dispositif mobile dans ledit espace à un instant donné, à partir des instants de réception déterminés au niveau dudit au moins un emplacement de réception, des instants de réception déterminés par le dispositif mobile, des coordonnées des emplacements d'émission dans ledit espace et de la distance entre chaque emplacement d'émission et ledit au moins un emplacement de réception.

Et, cette détermination de la position du dispositif mobile peut être déterminée par le dispositif mobile lui-même ou bien par un dispositif récepteur, ou une entité couplée à ce dispositif récepteur, située à un emplacement de réception fixe.

Un groupe d'au moins N+1 signaux de synchronisation émis permet de déterminer la position du dispositif mobile à un instant donné.

Au sein du groupe ces N+1 signaux de synchronisation peuvent par exemple être émis successivement ou bien pour certains au moins d'entre eux simultanément sur des canaux différents.

Le procédé comprend avantageusement des émissions de groupes successifs de N+1 signaux de synchronisation et une détermination de la position du dispositif mobile à des instants successifs respectivement associés auxdits groupes successifs.

On peut ainsi déterminer et/ou suivre en permanence la position du dispositif mobile.

Selon un mode de mise en œuvre, des informations temporelles obtenues à partir des instants de réception déterminés au niveau dudit au moins un emplacement de réception sont transmises au dispositif mobile depuis ledit au moins un emplacement de réception de façon que le dispositif mobile soit capable de déterminer lui-même sa position.

Ces informations temporelles peuvent être par exemple les instants de réception eux-mêmes déterminés au niveau dudit au moins un emplacement de réception, ou bien des différences entre ces instants de réception.

En variante, des informations temporelles peuvent être obtenues à partir des instants de réception déterminés par le dispositif mobile et être alors transmises par le dispositif mobile vers ledit au moins un emplacement de réception de façon qu'une entité tierce, distincte du dispositif mobile et couplée audit au moins un emplacement de réception, soit capable de déterminer la position du dispositif mobile.

Bien entendu, cette entité tierce peut être un dispositif récepteur situé à l'emplacement de réception ou bien par exemple un serveur couplé à ce dispositif récepteur.

Bien que cela ne soit pas absolument indispensable, il est particulièrement avantageux que les signaux de synchronisation soient des signaux à bande ultra large.

En effet, de tels signaux permettent une détermination précise de leur instant de réception par le dispositif mobile ou le ou les dispositifs de réception fixes.

Quant aux informations temporelles transmises soit depuis le dispositif mobile vers le dispositif récepteur fixe ou depuis le dispositif récepteur fixe vers le dispositif mobile, elles peuvent être de préférence transmises également au sein de signaux à bande ultra large.

Cela étant, elles pourraient être transmises également par tout autre moyen, par exemple en utilisant la technologie Bluetooth ou par Wifi par exemple.

Selon un autre aspect, il est proposé une infrastructure comprenant

- un espace de dimension N, N étant supérieur ou égal à 1,

- au moins N+1 dispositifs émetteurs respectivement situés à au moins N+1 emplacements d'émission fixes dans ledit espace et configurés pour émettre au moins un groupe d'au moins N+1 signaux de synchronisation respectifs mutuellement temporellement asynchrones,
- au moins un dispositif récepteur situé à au moins un emplacement de réception fixe dans ledit espace et configuré pour recevoir les signaux de synchronisation et pour déterminer l'instant de réception des signaux de synchronisation dans une base de temps propre à chaque dispositif récepteur,
- un dispositif mobile configuré pour recevoir chaque signal de synchronisation et déterminer l'instant de réception de chaque signal de synchronisation dans une base de temps propre au dispositif mobile, et
- des moyens de traitement configurés pour déterminer la position du dispositif mobile à un instant donné dans ledit espace, à partir des instants de réception déterminés par ledit au moins un dispositif récepteur, des instants de réception déterminés par le dispositif mobile, des cordonnées des emplacements d'émission dans ledit espace et de la distance entre chaque emplacement d'émission et ledit au moins un emplacement de réception.

Selon un mode de réalisation, le dispositif mobile incorpore lesdits moyens de traitement et ledit au moins un dispositif récepteur est configuré pour élaborer des informations temporelles à partir des instants de réception déterminés par ledit au moins un dispositif récepteur et pour transmettre ces informations temporelles au dispositif mobile de façon que le dispositif mobile soit capable de déterminer lui-même sa position.

En variante, l'infrastructure comporte une entité tierce, distincte du dispositif mobile, couplée audit au moins un dispositif récepteur (et pouvant être le ou un dispositif récepteur lui-même) et incorporant les moyens de traitement.

Le dispositif mobile est alors configuré pour élaborer des informations temporelles à partir des instants de réception déterminés par le dispositif mobile et pour transmettre ces informations temporelles vers ledit au moins un dispositif récepteur de façon que l'entité tierce soit capable de déterminer la position du dispositif mobile.

Les informations temporelles sont avantageusement transmises au sein de signaux à bande ultra large.

Les dispositifs émetteurs sont également avantageusement configurés pour émettre des groupes successifs de N+1 signaux de synchronisation et les moyens de traitement sont configurés pour déterminer la position du dispositif mobile à des instants successifs respectivement associés auxdits groupes successifs.

Il est possible que l'infrastructure comprenne plusieurs dispositifs de réception.

C'est le cas notamment lorsque l'espace multidimensionnel est trop vaste pour qu'un seul dispositif récepteur fixe soit capable de recevoir les signaux de synchronisation émis par l'ensemble des dispositifs émetteurs ou satellites.

Ces dispositifs récepteurs peuvent dans ce cas être mutuellement temporellement synchronisés.

En variante, certains au moins des dispositifs récepteurs peuvent être mutuellement temporellement asynchrones.

Il est également possible d'utiliser un dispositif récepteur pour synchroniser les autres dispositifs récepteurs asynchrones.

Comme indiqué ci-avant, les signaux de synchronisation émis par les dispositifs émetteurs sont avantageusement des signaux à bande ultra large.

Les dispositifs émetteurs sont avantageusement alimentés sur batterie.

Selon un autre aspect, il est également proposé un dispositif émetteur appartenant à l'infrastructure telle que définie ci-avant.

Selon un autre aspect, il est proposé un dispositif récepteur appartenant à l'infrastructure telle que définie ci-avant.

D'autres avantages et caractéristiques de l'invention apparaîtront à l'examen de la description détaillée de modes de mise en œuvre et de réalisation, nullement limitatifs, et des dessins annexés sur lesquels :

[Fig 1]
[Fig 2]
[Fig 3]
[Fig 4]
[Fig 5]
[Fig 6]
[Fig 7], et
[Fig 8] illustrent schématiquement des modes de mise en œuvre et de réalisation de l'invention.

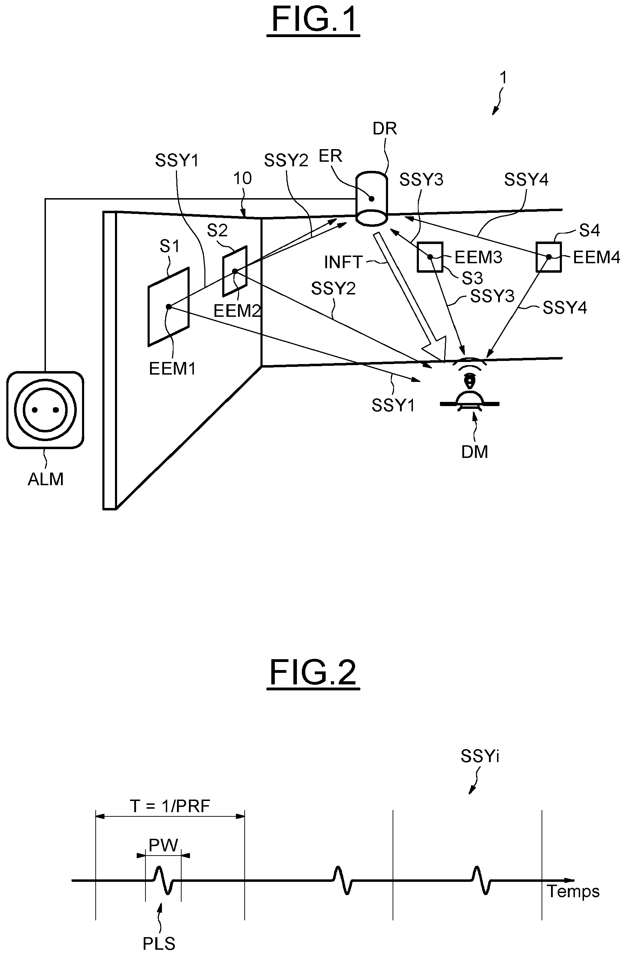

Sur la figure 1, la référence 1 désigne une infrastructure ou système, comportant dans cet exemple, un local 10 définissant un espace tridimensionnel.

Un dispositif mobile DM est destiné à se déplacer à l'intérieur du local 10 et l'on souhaite déterminer sa position dans le local 10.

Dans l'exemple illustré sur la figure 1, c'est le dispositif mobile DM lui-même qui va déterminer sa position.

L'infrastructure 1 comporte dans cet exemple quatre dispositifs émetteurs, ou satellites, S1-S4 respectivement situés à quatre emplacements d'émission EEM1-EEM4, fixes dans l'espace tridimensionnel. A cet égard, les satellites peuvent être fixés sur un ou plusieurs murs du local et éventuellement sur le plafond de celui-ci.

Les coordonnées de chaque satellite dans l'espace tridimensionnel sont connues. Les quatre satellites S1-S4 sont configurés pour émettre des groupes successifs de quatre signaux de synchronisation respectifs SSY1-SSY4, mutuellement temporellement asynchrones.

Bien que l'on n'ait représenté ici que quatre satellites, il serait bien entendu tout à fait envisageable que l'infrastructure 1 comprenne un nombre plus important de satellites Si.

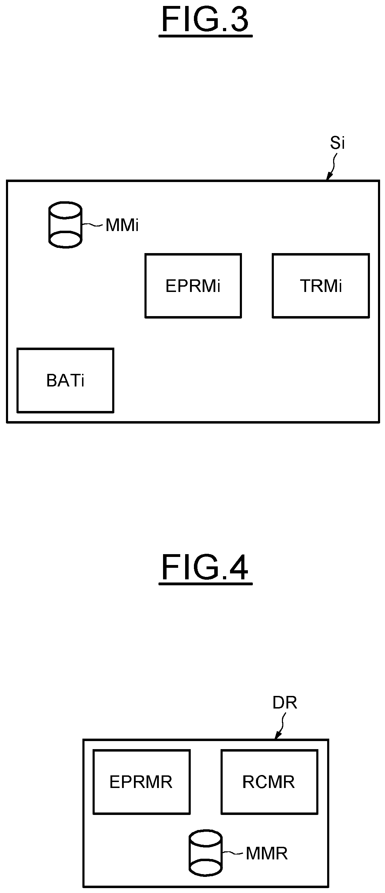

Comme illustré plus particulièrement sur la figure 3 sur laquelle on reviendra plus en détail ci-après, chaque satellite Si est ici alimenté au moyen d'une batterie BATi.

Dans l'exemple de réalisation de la figure 1, l'infrastructure 1 comporte également un dispositif récepteur DR situé à un emplacement de réception ER fixe dans ledit espace 10.

Ce dispositif récepteur est configuré pour recevoir les signaux de synchronisation SSYi et pour déterminer les instants de réception de ces signaux de synchronisation SSYi dans une base de temps propre au dispositif récepteur DR.

Bien que le dispositif récepteur DR puisse être alimenté sur batterie, le dispositif récepteur DR est ici alimenté sur une alimentation secteur ALM.

Par ailleurs, comme on le verra plus en détail ci-après, de façon que le dispositif mobile DM puisse déterminer sa position dans l'espace 10, et comme les signaux de synchronisation SSYi sont mutuellement asynchrones, des informations temporelles INFT, dont on reviendra plus en détail ci-après sur le contenu, sont transmises depuis le dispositif récepteur DR vers le dispositif mobile DM.

Comme illustré sur la figure 2, les signaux de synchronisation SSYi sont ici des signaux à bande ultra large (UWB).

La technologie du type à bande ultra large est bien connue de l'homme du métier et se distingue des technologies à bande étroite et spectre peu étalé en ce sens que la largeur de bande du signal de type ultra large bande est typiquement comprise entre environ 25% et environ 100% de la fréquence centrale.

Par ailleurs, au lieu de transmettre une porteuse continue modulée avec de l'information ou avec de l'information combinée avec un code d'étalement, ce qui détermine la largeur de bande du signal, la technologie ultra large bande prévoit la transmission d'une série d'impulsions très étroites PLS.

Ces impulsions extrêmement courtes dans le domaine temporel, transformées dans le domaine fréquentiel, conduisent à l'obtention du spectre à bande ultra large caractéristique de la technologie UWB.

Ces impulsions PLS ont une forme théorique connue.

Elles ont une largeur temporelle prédéterminée PW, par exemple de l'ordre de 2 nanosecondes. Les impulsions successives PLS sont respectivement contenues dans des fenêtres temporelles successives de longueur T égales à l'inverse de la fréquence de répétition des impulsions (« Pulse Répétition Frequency » PRF selon une dénomination anglosaxonne).

A titre indicatif, la longueur T de chaque fenêtre temporelle est par exemple égale à 50 nanosecondes.

La position de chaque impulsion dans une fenêtre temporelle peut varier d'une fenêtre à l'autre en fonction d'un code pseudo-aléatoire.

Les impulsions PLS possèdent des caractéristiques d'une impulsion du type à bande ultra large en ce sens que le rapport de la largeur de bande de l'impulsion à mi-puissance sur la fréquence centrale est supérieure à un quart. A titre indicatif, la fréquence centrale d'une impulsion peut varier entre deux et dix GHz.

Plusieurs possibilités existent pour coder les informations transmises.

Ainsi, il est possible d'utiliser une modulation de position (modulation PPM).

Dans ce cas, lorsque le signal véhicule les informations codées avec une telle modulation de position, l'impulsion peut être légèrement en avance ou légèrement en retard par rapport à la position de référence de l'impulsion dans la fenêtre, en fonction de la valeur 0 ou 1 de l'information transmise.

On peut également utiliser un codage par inversion de polarité des impulsions.

De façon classique et connue en soi, chaque signal de synchronisation SSY à bande ultra large est émis selon un format de trame UWB.

Ce format de trame UWB peut inclure les sections suivantes :

- un en-tête de synchronisation (Synchronisation Header : SHR) avec un préambule et un délimiteur de début de trame (Start Frame Délimiter : SFD),
- un en-tête de couche physique (Physical Layer Header : PHR) contenant des informations sur la longueur de la trame, le débit de données et des informations permettant d'effectuer des corrections d'erreurs de transmission. L'en-tête de couche physique est également utilisé pour décoder le champ utile (« payload » ; Physical Layer : PHY) contenant notamment les données utiles à transmettre.

Ces données utiles peuvent inclure outre le type de trame, un identifiant du dispositif émetteur de la trame.

Par ailleurs, le délimiteur de début de trame (SFD) peut être utilisé pour détecter l'instant de réception de la trame avec une grande précision.

La figure 3 illustre de façon très schématique une architecture d'un dispositif émetteur ou satellite Si.

Une telle architecture est classique et connue en soi.

Plus précisément, le satellite Si comporte un moyen de traitement élémentaire EPRMi, par exemple un microcontrôleur, destiné notamment à élaborer le contenu des trames UWB formant les signaux de synchronisation SSYi.

Ces informations sont transmises ensuite à des moyens de transmission TRMi, de structure classique, permettant la transmission du signal SSYi conformément à la technologie UWB.

Des moyens de mémoire MMi peuvent incorporer l'identifiant du satellite Si ainsi que ses coordonnées $x_i$, $y_i$ et $z_i$ dans l'espace 10.

Ces informations peuvent être par exemple transmises au sein du signal de synchronisation SSYi transmis par le satellite Si.

Par ailleurs, comme indiqué ci-avant, une batterie BATi alimente le satellite Si.

La figure 4 illustre de façon schématique l'architecture du dispositif récepteur DR.

Celui-ci comporte des moyens de réception RCMR, de structure classique et connue en soi, destinés à recevoir et à traiter les trames UWB reçues.

Les informations contenues dans ces trames sont traitées par un moyen de traitement élémentaire EPRMR, tel qu'un microcontrôleur.

Comme il sera expliqué plus en détail ci-après, ce moyen de traitement élémentaire EPRMR va notamment déterminer l'instant de réception de chaque signal de synchronisation reçu et effectuer des calculs dont on reviendra plus en détail ci-après sur le contenu.

Le dispositif récepteur DR comporte également une mémoire MMR destinée par exemple à contenir les coordonnées des différents satellites dans l'espace 10.

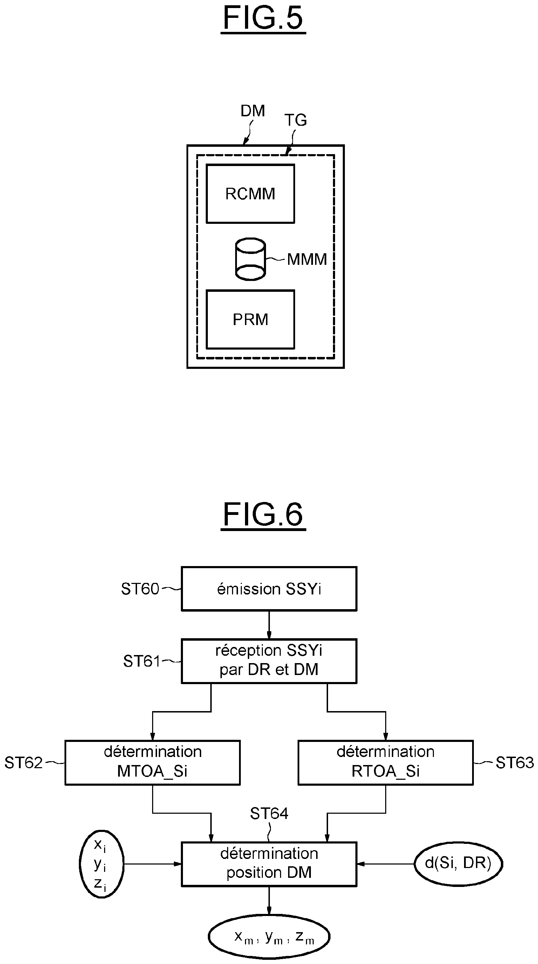

La figure 5 illustre de façon schématique l'architecture du dispositif mobile DM.

Celui-ci comporte ici un transpondeur ou étiquette (« tag » en langue anglaise) TG contenant également un moyen de traitement élémentaire PRM, par exemple un microcontrôleur, ainsi que des moyens de réception RCMM, de structure classique et connue en soi, destinés à recevoir et à traiter les trames UWB et à transmettre les informations utiles qu'elles contiennent aux moyens de traitement élémentaires PRM.

Là encore, le moyen de traitement élémentaire PRM va effectuer des calculs dont on reviendra plus en détail ci-après sur le contenu.

Le transpondeur TG comporte également une mémoire MMM contenant également par exemple les coordonnées des satellites Si dans l'espace.

On se réfère maintenant plus particulièrement à la figure 6, pour décrire un mode de mise en œuvre du procédé selon l'invention.

Dans une étape ST60, les signaux de synchronisation SSYi sont émis et sont reçus, dans une étape ST61, par le dispositif récepteur fixe DR et par le dispositif mobile DM.

Dans l'étape ST62, les instants de réception MTOA_Si des signaux de synchronisation par le dispositif mobile, sont déterminés.

De même, dans l'étape ST63, les instants RTOA_Si des signaux de synchronisation par le dispositif récepteur, sont déterminés.

La position du dispositif mobile DM dans l'espace 10, c'est-à-dire ses coordonnées $x_m$, $y_m$ et $z_m$ est déterminée dans l'étape ST64 à partir des instants de réception MTOA_Si, RTOA_Si,

des coordonnées $x_i$, $y_i$, $z_i$ des satellites Si, et
de la distance d(Si,DR) entre chaque satellite Si et le dispositif récepteur DR.

Cette position est déterminée par des moyens de traitement.

Cette position du dispositif mobile DM peut être déterminée par le dispositif mobile DM lui-même (dans ce cas le moyen de traitement élémentaire PRM incorporent les moyens de traitement) ou bien par le dispositif récepteur DR (dans ce cas le moyen de traitement élémentaire EPRMR incorporent les moyens de traitement) ou encore une entité telle qu'un serveur, couplée à ce dispositif récepteur DR (dans ce cas le l'entité tierce incorpore les moyens de traitement).

On se place maintenant dans l'exemple de la figure 1 où la position du dispositif mobile DM est déterminée par le dispositif DM lui-même.

Les instants de réception MTOA_Si des signaux de synchronisation par le dispositif mobile DM dans sa propre base de temps sont définis par les équations EQ1 ci-dessous.

$$MTOA\_S1 = t\_S1 + d(S1,DM)/c - t\_DM$$

$$MTOA\_S2 = t\_S2 + d(S2,DM)/c - t\_DM$$

$$MTOA\_S3 = t\_S3 + d(S3,DM)/c - t\_DM$$

$$MTOA\_S4 = t\_S4 + d(S4,DM)/c - t\_DM$$

Dans ces équations, d(Si,DM) désigne la distance entre le satellite Si et le dispositif mobile DM.

c désigne la vitesse de propagation des signaux de synchronisation, ici la vitesse de la lumière.

t_Si désigne l'instant d'émission du signal de synchronisation SSYi émis par le satellite Si dans sa propre base de temps.

Cet instant d'émission t_Si, dépendant du décalage temporel de la base de temps propre au satellite Si par rapport à un temps absolu, est inconnu.

t_DM désigne un décalage temporel dépendant du décalage temporel de la base de temps propre au dispositif mobile DM par rapport à un temps absolu.

Là encore, ce décalage temporel est inconnu.

L'instant de réception MTOA_Si correspond à la durée séparant l'instant où le dispositif mobile commence à écouter et l'instant de réception du signal de synchronisation SSYi correspondant.

Comme indiqué précédemment, cet instant de réception est déterminé par exemple à l'aide du délimiteur de début de trame SFD mentionné ci-avant.

La distance d(Si,DM) est définie par l'équation EQ2 ci-dessous.

$$d(Si,DM) = [(x_i - x_m)^2 + (y_i - y_m)^2 + (z_i - z_m)^2]^{1/2}$$

On voit que le jeu d'équations EQ1 ci-dessous comporte huit inconnues, à savoir les décalages temporels t_Si, le décalage temporel t_DM et les coordonnées du dispositif mobile DM.

En effectuant des différences entre ces instants de réception, on peut éliminer le paramètre inconnu t_DM comme le montre le jeu d'équations EQ3 ci-dessous.

$$MTDOA\_1 = MTOA\_S1 - MTOA\_S2 = t\_S1 - t\_S2 + d(S1,DM)/c - d(S2,DM)/c$$

$$MTDOA\_2 = MTOA\_S2 - MTOA\_S3 = t\_S2 - t\_S3 + d(S2,DM)/c - d(S3,DM)/c$$

$$MTDOA\_3 = MTOA\_S3 - MTOA\_S4 = t\_S3 - t\_S4 + d(S3,DM)/c - d(S4,DM)/c$$

$$MTDOA\_4 = MTOA\_S4 - MTOA\_S1 = t\_S4 - t\_S1 + d(S4, DM)/c - d(S1, DM)/c$$

Cela étant, on remarque que, dans ce jeu d'équations EQ3, les différences t_Si-t_Sj demeurent toujours des paramètres inconnus.

C'est la raison pour laquelle le dispositif mobile DM, qui est capable de déterminer les différences d'instants MTDOA_i ne peut pas déterminer les coordonnées $x_m$, $y_m$ et $z_m$ du dispositif mobile DM.

Ces paramètres inconnus vont pouvoir être déterminés à partir des instants de réception des signaux de synchronisation SSYi par le dispositif récepteur DR dans sa propre base de temps.

Plus précisément, ces instants de réception RTOA_Si sont définis par le jeu d'équations EQ4 ci-dessous.

$$RTOA\_S1 = t\_S1 + d(S1,DR)/c - t\_DR$$

$$RTOA\_S2 = t\_S2 + d(S2,DR)/c - t\_DR$$

$$RTOA\_S3 = t\_S3 + d(S3,DR)/c - t\_DR$$

$$RTOA\_S4 = t\_S4 + d(S4,DR)/c - t\_DR$$

Les différentes distances d(Si,DR) sont connues puisque les coordonnées des satellites et du dispositif récepteur DR dans l'espace 10 sont connues.

Les paramètres inconnus sont donc le décalage temporel t_DR et les instants d'émission t_Si.

En effectuant des différences entre ces instants de réception, on peut déterminer les différences t_Si-t_Sj, comme le montre le jeu d'équations EQ5 ci-dessous.

$$t\_S1 - t\_S2 = RTOA\_S1 - RTOA\_S2 + d(S2,DR)/c - d(S1,DR)/c$$

$$t\_S2 - t\_S3 = RTOA\_S2 - RTOA\_S3 + d(S3,DR)/c - d(S2,DR)/c$$

$$t\_S3 - t\_S4 = RTOA\_S3 - RTOA\_S4 + d(S4,DR)/c - d(S3,DR)/c$$

$$t\_S4 - t\_S1 = RTOA\_S4 - RTOA\_S1 + d(S1,DR)/c - d(S4,DR)/c$$

Les instants de réception RTOA_Si forment donc par exemple les informations temporelles INFT (figure 1) transmises depuis le dispositif récepteur vers le dispositif mobile permettant au dispositif mobile de déterminer les différences t_Si-t_Sj.

En effet en reportant ces différences calculées ci-dessus dans le jeu d'équations EQ3 ci-dessus, le moyen de traitement élémentaire PRM du dispositif mobile peut donc résoudre le jeu d'équations EQ3 et déterminer la position $x_m$, $y_m$ et $z_m$ du dispositif mobile.

Bien entendu, il serait possible, au lieu de transmettre ces instants de réception RTOA_Si, de transmettre directement les différences RTOA_Si-RTOA_Sj mentionnées dans le jeu d'équations EQ5 ci-dessus.

D'autres combinaisons sont possibles pour former les informations temporelles INFT.

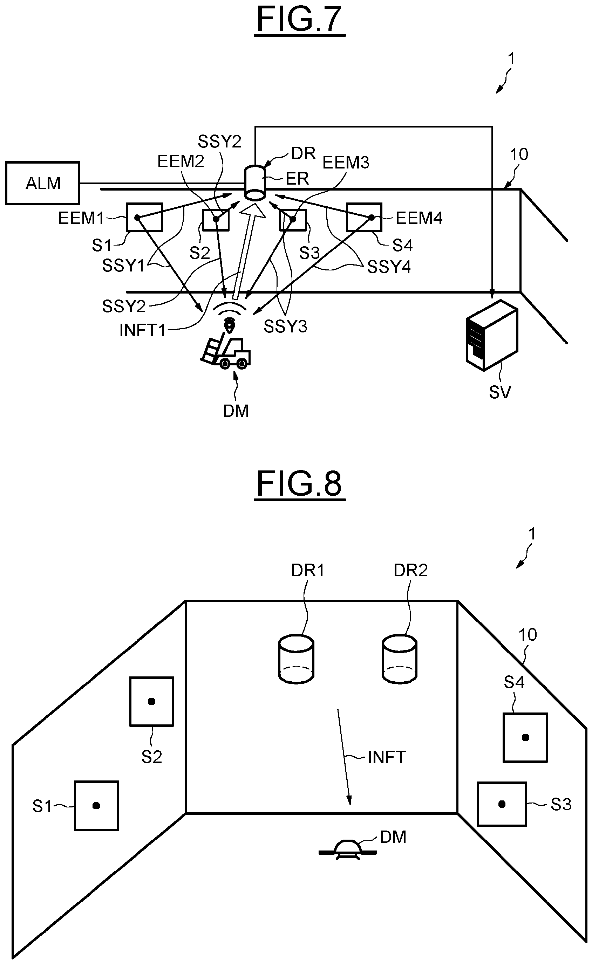

On se réfère maintenant plus particulièrement à la figure 7, qui illustre une variante de réalisation et de mise en œuvre dans laquelle c'est un serveur SV par exemple, connecté au dispositif récepteur DR, qui va déterminer la position du mobile DM.

Là encore, d'une façon analogue à ce qui a été décrit ci-avant, les satellites Si émettent pour déterminer la position du dispositif mobile à un instant t, un groupe de signaux de synchronisation SSYi respectifs, reçus par le dispositif récepteur DR et par le dispositif mobile DM.

Mais, cette fois-ci, comme indiqué ci-dessus, les moyens de traitement qui vont déterminer la position du dispositif mobile sont incorporés dans le moyen de traitement élémentaire EPMPR du dispositif récepteur DR ou bien dans le serveur.

Et, cette fois-ci, ces moyens de traitement vont avoir besoin d'informations temporelles INFT1 qui vont être transmises depuis le dispositif mobile DM vers le dispositif récepteur DR.

Les instants de réception RTOA_Si des signaux de synchronisation SSYi par le dispositif récepteur DR dans sa propre base de temps, sont là encore définis par le jeu d'équations EQ4 ci-dessus.

La différence de ces instants de réception permet de définir les différences des paramètres t_Si-t_Sj tels que définis par le jeu d'équation EQ5 ci-dessus.

Il est possible de reporter ces différences t_Si-t_Sj dans le jeu d'équations EQ3, mais le dispositif récepteur DR ne peut pas compléter ces équations car il lui manque l'information MTOA_Si-MTOA_Sj.

Par conséquent, dans cette variante de mise en œuvre et de réalisation, les informations temporelles INFT1 transmises depuis le dispositif mobile vers le dispositif récepteur DR peuvent être soit les instants MTOA_Si de réception des signaux de synchronisation SSY par le dispositif mobile, soit les différences MTOA_Si-MTOA_Sj, soit toute autre combinaison permettant d'élaborer les informations temporelles INFT1.

Avec ces informations, le moyen de traitement élémentaire PRM du dispositif récepteur peut résoudre le jeu d'équations EQ3 et déterminer les coordonnées $x_m$, $y_m$ et $z_m$ du dispositif mobile.

Un groupe de signaux SSYi permet de déterminer la position du dispositif mobile DM à un instant donné. En pratique les satellites émettent alors successivement plusieurs groupes de N+1 (ici quatre) signaux de synchronisation SSYi de façon à pouvoir déterminer la position du dispositif mobile DM en permanence.

Par ailleurs, pour que le dispositif mobile DM ou le dispositif récepteur DR puisse déterminer au sein d'un groupe de signaux SSYi quel satellite est associé à un signal de synchronisation reçu, on peut utiliser par exemple l'identifiant du satellite contenu dans le signal de synchronisation transmis.

En variante, si l'on utilise une méthode d'accès multiple par répartition temporelle (TDMA : Time Division Multiple Access), on peut alors affecter aux différents satellites, différents intervalles temporels au sein desquels ils émettront leurs signaux de synchronisation. Et, le dispositif mobile et le dispositif récepteur connaissant ces intervalles temporels peuvent déterminer, à la réception d'un signal de synchronisation, le satellite qui lui est associé.

La figure 8 illustre un autre mode de réalisation possible d'une infrastructure selon l'invention.

Dans cet exemple, il est prévu plusieurs dispositifs récepteurs fixes, ici deux dispositifs récepteurs DR1, DR2.

C'est notamment le cas lorsque le local 10 est trop grand pour qu'un seul dispositif récepteur puisse à lui seul recevoir les signaux de synchronisation émis par les satellites.

On suppose dans cet exemple que c'est le dispositif mobile qui va déterminer lui-même sa position.

Dans ce cas, d'une façon analogue à ce qui a été décrit ci-avant, le dispositif DM aura besoin d'informations temporelles INFT fournies par l'un au moins des dispositifs récepteurs DR1, DR2.

On va à cet égard utiliser les instants de réception des signaux de synchronisation par les dispositifs récepteurs DR1 et DR2.

Plus précisément, on suppose ici que le dispositif récepteur DR1 n'est pas capable de recevoir le signal de synchronisation SSY4 provenant du satellite S4 et que le dispositif DR2 n'est pas capable de recevoir le signal de synchronisation SSY3 provenant du satellite S3.

Les instants de réception R1TOA_Si des autres signaux de synchronisation par le premier dispositif récepteur DR1 sont définis par les équations EQ7 ci-dessous.

$$R1TOA\_S1 = t\_S1 + d(S1,DR1)/c - t\_DR1$$

$$R1TOA\_S2 = t\_S2 + d(S2,DR1)/c - t\_DR1$$

$$R1TOA\_S3 = t\_S3 + d(S3,DR1)/c - t\_DR1$$

Les instants de réception R2TOA_Si des autres signaux de synchronisation reçus par le deuxième dispositif récepteur DR2 sont définis par le jeu d'équations EQ8 ci-dessous.

$$R2TOA\_S1 = t\_S1 + d(S1,DR2)/c - t\_DR2$$

$$R2TOA\_S2 = t\_S2 + d(S2,DR2)/c - t\_DR2$$

$$R2TOA\_S4 = t\_S4 + d(S4,DR2)/c - t\_DR2$$

A partir des équations EQ7 on peut en déduire le jeu d'équations EQ9 ci-dessous permettant d'obtenir t_S1-t_S2 et t_S2-t_S3.

$$t\_S1 - t\_S2 = R1TOA\_S1 - R1TOA\_S2 - d(S1,DR1)c + d(S2,DR1)/c$$

$$t\_S2 - t\_S3 = R1TOA\_S2 - R1TOA\_S3 - d(S2,DR1)/c + d(S3,DR1)/c$$

A partir du jeu d'équations EQ8 on peut en déduire le jeu d'équations EQ10 ci-dessous permettant de définir t_S1-t_S2 et t_S4-t_S1.

$$t\_S1-t\_S2=R2TOA\_S1-R2TOA\_S2-d(S1,DR2)/c+d(S2,DR2)/c$$

$$t\_S4-t\_S1=R2TOA\_S4-R2TOA\_S1-d(S4,DR2)/c+d(S1,DR2)/c$$

Les jeux d'équations EQ7 et EQ8 permettent également d'obtenir l'équation EQ11 ci-dessous définissant la différence t_S3-t_S4.

$$t\_S3-t\_S4=R1TOA\_S3-R2TOA\_S4-d(S3,DR1)+d(S4,DR2)+t\_DR1-t\_DR2$$

On voit dans cette équation EQ11 que le terme t_DR1-t_DR2 est présent.

Or, puisque les deux dispositifs DR1 et DR2 sont temporellement synchronisés, cette différence des décalages temporels est connue ou mesurée et par exemple égale à la distance entre les deux dispositifs DR1 et DR2 divisée par la vitesse c.

Et, comme indiqué ci-avant, en reportant les différences de décalages temporels définies par les équations EQ9 à EQ11 dans le jeu d'équations EQ3, le moyen de traitement élémentaire PRM du dispositif mobile peut déterminer la position $x_m$, $y_m$ et $z_m$ du dispositif mobile DM.

Ainsi, dans ce mode de mise en œuvre, les informations temporelles INFT transmises au dispositif mobile sont par exemple les instants de réception des signaux de synchronisation R1TOA_Si et R2TOA_Si mentionnés dans les équations EQ9 à EQ11, ou alors les différences entre ces instants de réception, ou toute autre combinaison appropriée.

Si les deux récepteurs DR1 et DR2 ne sont pas synchronisés, la différence t_DR1-t_DR2 est inconnue. On peut alors ajouter un troisième dispositif récepteur qui va être utilisé pour envoyer une estimation de cette différence t_DR1-t_DR2.

L'invention n'est pas limitée aux modes de mise en œuvre et de réalisation qui viennent d'être décrits mais en embrassent toutes les variantes.

Il serait possible de prévoir un plus grand nombre de satellites émettant des groupes successifs de signaux de synchronisation correspondants, notamment dans le cas de grands locaux.

Dans ce cas on positionnera les différents satellites de façon que le dispositif mobile et le ou les dispositifs récepteurs reçoivent toujours des groupes d'au moins quatre signaux de synchronisation.

## Revendications

1. Procédé de localisation d'un dispositif mobile dans un espace de dimension N, N étant supérieur ou égal à 1, comprenant

   - une émission d'au moins un groupe d'au moins N+1 signaux de synchronisation mutuellement temporellement asynchrones (SSYi) depuis respectivement au moins N+1 emplacements d'émission (EEMi) fixes dans ledit espace,
   - une réception des signaux de synchronisation dudit groupe par le dispositif mobile (DM) et au niveau d'au moins un emplacement de réception (ER) fixe dans ledit espace,
   - une détermination de l'instant de réception (MTOA_Si) de chaque signal de synchronisation dudit au moins un groupe par le dispositif mobile dans une base de temps propre au dispositif mobile,
   - une détermination des instants de réception (RTOA_Si) des signaux de synchronisation dudit au moins un groupe au niveau dudit au moins un emplacement de réception dans une base de temps propre à chaque emplacement de réception, et
   - une détermination de la position ($x_m$, $y_m$, $z_m$) du dispositif mobile (DM) dans ledit espace (10) à un instant donné, à partir des instants de réception déterminés au niveau dudit au moins un emplacement de réception, des instants de réception déterminés par le dispositif mobile, des coordonnées des emplacements d'émission dans ledit espace et de la distance entre chaque emplacement d'émission et ledit au moins un emplacement de réception.

2. Procédé selon la revendication 1, dans lequel des informations temporelles (INFT) obtenues à partir des instants de réception déterminés au niveau dudit au moins un emplacement de réception sont transmises au dispositif mobile (DM) depuis ledit au moins un emplacement de réception de façon que le dispositif mobile soit capable de déterminer lui-même sa position.

**3.** Procédé selon la revendication 1, dans lequel des informations temporelles (INFT1) obtenues à partir des instants de réception déterminés par le dispositif mobile, sont transmises par le dispositif mobile (DM) vers ledit au moins un emplacement de réception de façon qu'une entité tierce, distincte du dispositif mobile et couplée audit au moins un emplacement de réception soit capable de déterminer la position du dispositif mobile.

**4.** Procédé selon la revendication 2 ou 3, dans lequel lesdites informations temporelles (INFT ; INFT1) sont transmises au sein de signaux à bande ultra large.

**5.** Procédé selon l'une des revendications précédentes, comprenant des émissions de groupes successifs de N+1 signaux de synchronisation (SSYi), et une détermination de la position du dispositif mobile à des instants successifs respectivement associés auxdits groupes successifs.

**6.** Procédé selon l'une des revendications précédentes, dans lequel les signaux de synchronisation (SSYi) sont des signaux à bande ultra large.

**7.** Procédé selon l'une des revendications précédentes, dans lequel les signaux de synchronisation sont émis par des dispositifs émetteurs (Si) alimentés sur batterie.

**8.** Procédé selon l'une des revendications précédentes, dans lequel N est égal à 3.

**9.** Infrastructure, comprenant

- un espace (10) de dimension N, N étant supérieur ou égal à 1,
- au moins N+1 dispositifs émetteurs (Si) respectivement situés à au moins N+1 emplacements d'émission fixes dans ledit espace et configurés pour émettre au moins un groupe d'au moins N+1 signaux de synchronisation respectifs mutuellement temporellement asynchrones (SSYi),
- au moins un dispositif récepteur (DR) situé à au moins un emplacement de réception fixe dans ledit espace et configuré pour recevoir les signaux de synchronisation et pour déterminer l'instant de réception des signaux de synchronisation dans une base de temps propre à chaque dispositif récepteur,
- un dispositif mobile (DM) configuré pour recevoir chaque signal de synchronisation et déterminer l'instant de réception de chaque signal de synchronisation dans une base de temps propre au dispositif mobile, et
- des moyens de traitement (PRM ; EPRMR) configurés pour déterminer la position du dispositif mobile à un instant donné dans ledit espace, à partir des instants de réception déterminés par ledit au moins un dispositif récepteur, des instants de réception déterminés par le dispositif mobile, des coordonnées des emplacements d'émission dans ledit espace et de la distance entre chaque emplacement d'émission et ledit au moins un emplacement de réception.

**10.** Infrastructure selon la revendication 9, dans laquelle le dispositif mobile (DM) incorpore les moyens de traitement (PRM), et ledit au moins un dispositif récepteur (DR) est configuré pour élaborer des informations temporelles (INFT) à partir des instants de réception déterminés par ledit au moins un dispositif récepteur et pour transmettre ces informations temporelles au dispositif mobile de façon que le dispositif mobile soit capable de déterminer lui-même sa position.

**11.** Infrastructure selon la revendication 9, comportant une entité tierce (SV), distincte du dispositif mobile, couplée audit au moins un dispositif récepteur et incorporant les moyens de traitement, et le dispositif mobile (DM) est configuré pour élaborer des informations temporelles (INF1) à partir des instants de réception déterminés par le dispositif mobile et pour transmettre ces informations temporelles vers ledit au moins un dispositif récepteur de façon que l'entité tierce soit capable de déterminer la position du dispositif mobile.

**12.** Infrastructure selon la revendication 10 ou 11, dans laquelle lesdites informations temporelles (INFT ; INFT1) sont transmises au sein de signaux à bande ultra large.

**13.** Infrastructure selon l'une des revendications 9 à 12, dans laquelle les dispositifs émetteurs (Si) sont configurés pour émettre des groupes successifs de N+1 signaux de synchronisation, et les moyens de traitement sont configurés pour déterminer la position du dispositif mobile à des instants successifs respectivement associés auxdits groupes successifs.

**14.** Infrastructure selon l'une des revendications 9 à 13, comprenant plusieurs dispositifs de réception (DR1, DR2).

**15.** Infrastructure selon la revendication 14, dans laquelle les dispositifs de réception (DR1, DR2) sont mutuellement temporellement synchronisés.

**16.** Infrastructure selon la revendication 14, dans laquelle certains au moins des dispositifs de réception (DR1, DR2) sont mutuellement temporellement asynchrones.

**17.** Infrastructure selon l'une des revendications 9 à 16, dans laquelle les signaux de synchronisation (SSYi) sont des signaux à bande ultra large.

**18.** Infrastructure selon l'une des revendications 9 à 17, dans laquelle les dispositifs émetteurs (Si) sont alimentés sur batterie.

**19.** Infrastructure selon l'une des revendications 9 à 18, dans lequel N est égal à 3.

**20.** Dispositif émetteur appartenant à l'infrastructure (1) selon l'une des revendications 9 à 19.

**21.** Dispositif récepteur appartenant à l'infrastructure (1) selon l'une des revendications 9 à 19.

# FIG.1

# FIG.2

# FIG.3

# FIG.4

# FIG.5

DM  TG

RCMM

MMM

PRM

# FIG.6

ST60 — émission SSYi

ST61 — réception SSYi
par DR et DM

ST62 — détermination
MTOA_Si

détermination
RTOA_Si — ST63

ST64

$x_i$
$y_i$
$z_i$

détermination
position DM

$d(Si, DR)$

$x_m, y_m, z_m$

## FIG.7

## FIG.8

Europäisches
Patentamt
European
Patent Office
Office européen
des brevets

# RAPPORT DE RECHERCHE EUROPEENNE

Numéro de la demande

EP 22 17 3691

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2018/213492 A1 (XIA PEIQING [US]) 26 juillet 2018 (2018-07-26) * alinéa [0014] – alinéa [0092] * * figures 1-5 * * abrégé * ----- | 1-21 | INV. G01S5/02 G01S5/14 G01S5/00 G01S1/02 |
| A | WO 2020/212599 A1 (BESPOON SAS [FR]) 22 octobre 2020 (2020-10-22) * le document en entier * ----- | 1-21 | |

DOMAINES TECHNIQUES
RECHERCHES (IPC)

G01S

Le présent rapport a été établi pour toutes les revendications

| Lieu de la recherche | Date d'achèvement de la recherche | Examinateur |
|---|---|---|
| Munich | 4 octobre 2022 | Galmiche, Aurélien |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
................................................
& : membre de la même famille, document correspondant

EPO FORM 1503 03.82 (P04C02)

**EP 4 095 543 A1**

## ANNEXE AU RAPPORT DE RECHERCHE EUROPEENNE
## RELATIF A LA DEMANDE DE BREVET EUROPEEN NO.

**EP 22 17 3691**

**04-10-2022**

| Document brevet cité au rapport de recherche | Date de publication | Membre(s) de la famille de brevet(s) | Date de publication |
|---|---|---|---|
| US 2018213492 A1 | 26-07-2018 | AUCUN | |
| WO 2020212599 A1 | 22-10-2020 | CN 113692541 A | 23-11-2021 |
| | | CN 113711077 A | 26-11-2021 |
| | | CN 113728662 A | 30-11-2021 |
| | | EP 3956676 A1 | 23-02-2022 |
| | | EP 3956683 A1 | 23-02-2022 |
| | | EP 3956684 A1 | 23-02-2022 |
| | | US 2022210607 A1 | 30-06-2022 |
| | | US 2022210620 A1 | 30-06-2022 |
| | | US 2022216892 A1 | 07-07-2022 |
| | | WO 2020212599 A1 | 22-10-2020 |
| | | WO 2020212722 A1 | 22-10-2020 |
| | | WO 2020212723 A1 | 22-10-2020 |

EPO FORM P0460